# EUROPÄISCHE PATENTSCHRIFT

(11) **EP 1 088 037 B1**
(45) Veröffentlichungstag und Bekanntmachung des Hinweises auf die Patenterteilung: **12.01.2005**
(21) Anmeldenummer: 00920543.6
(22) Anmeldetag: 23.03.2000
(51) Int. Cl.: C09D 5/28, C09D 7/12, C09D 7/14

(54) **MATTIERUNGS- UND STRUKTURMITTEL ENTHALTENDE PASTEN UND DIESE ENTHALTENDE BESCHICHTUNGSMITTEL**
PASTES CONTAINING MATTING AND STRUCTURING AGENTS AND COATING AGENTS CONTAINING SAID PASTES
PATES CONTENANT DES AGENTS DE MATAGE ET DE STRUCTURATION ET PRODUITS DE REVETEMENT LES CONTENANT

(30) Priorität: 16.04.1999 DE 19917228
(43) Veröffentlichungstag der Anmeldung: 04.04.2001
(73) Patentinhaber: E.I. DU PONT DE NEMOURS & CO. (INC.), Wilmington Delaware 19898 (US)
(72) Erfinder: BERSCHEL, Günter, D-50968 Köln (DE); HELLMANN, Udo, D-42897 Remscheid (DE); STEPHAN, Werner, D-42111 Wuppertal (DE); STRICKER, Wolfgang, D-42897 Remscheid (DE)
(74) Vertreter: Gille Hrabal Struck Neidlein Prop Roos
(86) Internationale Anmeldenummer: PCT/EP2000/002556
(87) Internationale Veröffentlichungsnummer: WO 2000/063302

(56) Entgegenhaltungen:
- US-A- 5 759 630
- US-A- 5 858 506

## Beschreibung

Die Erfindung betrifft Zubereitungen von Mattierungs- und Strukturmitteln zur Einarbeitung in Beschichtungsmittel, insbesondere in emissionsarme festkörperreiche Beschichtungsmittel, sowie die die Mattierungs- und Strukturmittelzubereitungen enthaltenden Beschichtungsmittel. Die Beschichtungsmittel finden bevorzugt Anwendung in der Fahrzeug- und Fahrzeugteilelackierung.

Für bestimmte Anwendungsgebiete in der Fahrzeug- und Industrielackierung ist es erforderlich, Lacke bereitzustellen, die im Glanzgrad reduzierte und/oder strukturierte Oberflächen ergeben. Beispielsweise sollen lackierte Nutzfahrzeugchassis matte Oberflächen aufweisen und Kunststoffteile, z.B. Außenanbauteile an Fahrzeugen wie Stoßstangen, sollen mattglänzende und/oder strukturierte Oberflächen erhalten. Zur Erzielung der mattierten und/oder strukturierten Oberflächen werden den Beschichtungsmitteln Mattierungs- bzw. Strukturzusätze zugegeben. Bei der Trocknung des applizierten Lackfilms erzeugen die Mattierungsmittelpartikel eine mikrorauhe Oberflächenstruktur. Dadurch wird das einfallende Licht diffus reflektiert und vermittelt dem Betrachter den Eindruck einer matten Oberfläche. Die Mattierungsmittelpartikel müssen dabei im trockenen Lackfilm homogen verteilt sein. Die Mattierungs- und/oder Strukturzusätze können als pulverförmiges Material oder in Pastenform eingearbeitet werden. Übliche Mattiererpasten, enthalten im allgemeinen neben den Mattierungsmitteln noch Bindemittel, Lösemittel und gegebenenfalls Additive.

In Mattiererpasten einsetzbare Bindemittel sind z.B. Alkyd-, Aldehyd-, Acrylat-, Polyesterharze und/oder Celluloseester.

So beschreibt die EP-A-700 408 eine zur Erzeugung von strukturierten Beschichtungen auf Kunststoffoberflächen geeignete Mattpaste, welche in Beschichtungsmittel auf Basis von hydroxyfunktionellen Bindemitteln und Polyisocyanatvernetzern eingearbeitet wird. Die Mattpaste enthält als Bindemittel hydroxyfunktionelle Polyester, hydroxyfunktionelle Polyacrylate und gegebenenfalls Celluloseester. Strukturmittel werden dem Beschichtungsmittel in Pulverform zugegeben.

Mit den vorgenannten in Mattiererpasten einsetzbaren Bindemitteln werden oftmals nach Applikation des Lackes noch zu glänzende Oberflächen erhalten, d.h. die Mattierwirkung ist noch unzureichend.

Werden die Beschichtungsmittel, die mattierte/strukturierte Oberflächen ergeben sollen, mittels eines Mischlacksystem erstellt, wie es beispielsweise in der Fahrzeugreparaturlackierung üblicherweise zur Bereitstellung einer Vielzahl verschiedener Farbtöne direkt vor Ort beim Anwender eingesetzt wird, dann enthält ein solches Mischlacksystem im allgemeinen neben den farbigen Mischlacken noch sogenannte Zusatzmischlacke, beispielsweise solche zur Erzielung gewünschter Strukturen oder Glanzgrade. Die Komponenten eines solchen Mischlacksystems können dabei als fertige Lacke oder Halbfabrikate vorliegen.

Aus ökologischen Gründen werden auch in Mischlacksystemen zunehmend emissionsarme festkörperreiche Lacke (sogenannte High-solid-Lacke) eingesetzt. Voraussetzung für eine einwandfreie Handhabung und gute Dosierfähigkeit der Mischlacke, ist eine ausreichende Fließfähigkeit. Bei den genannten Zusatzmischlacken, die Mattierungs- und/oder Strukturzusätze enthalten und in Highsolid-Lacken eingesetzt werden sollen, ist es problematisch, eine gute Fließfähigkeit zu erreichen, da zur Erzielung vorgegebener Struktureffekte oder Glanzgrade und bedingt durch den geforderten hohen Festkörpergehalt der zu verarbeitenden Lacke die Zusatzmischlacke so hohe Anteile an Struktur- und/oder Mattierungsmitteln enthalten müssen, daß pastöse nicht mehr fließfähige Produkte vorliegen, die ein zumutbares Verarbeiten unmöglich machen. Dieser Nachteil wird auch durch die in EP-A-700 408 beschriebenen Mattpasten nicht gelöst.

Außerdem besteht bei den Mattierungsmittel und/oder Strukturmittel enthaltenden Zubereitungen generell das Problem, daß angetrocknete Partikel dieser Zubereitungen bzw. der sie enthaltenden Beschichtungsmittel vom Dosenrand der jeweiligen Lackbehälter zurück in den Lack fallen und so zu Stippenbildung führen können. Ein Absieben dieser Partikel aus dem Lack vor der Applikation ist nicht möglich, da dann die Strukturmittel mitentfernt werden würden. Häufig ergeben Lacke, die Mattierungsmittel enthalten, kein einheitliches Spritzbild. Insbesondere auf größeren zu lackierenden Flächen kommt es zu Fleckenbildung.

Aufgabe der Erfindung war es daher, Mattierungsmittel- und/oder Strukturmittelzubereitungen, insbesondere für emissionsarme festkörperreiche Beschichtungsmittel, in Pastenform bereitzustellen, die bei sehr guter Mattierungswirkung und Strukturgebung eine gute Fließfähigkeit aufweisen und eine problemlose Dosierbarkeit gewährleisten. Die pastenförmigen Zubereitungen sollen gut verarbeitbar sein. Angetrocknete Partikel dieser Zubereitungen bzw. der sie enthaltenden Beschichtungsmittel sollen im wesentlichen krümelfrei sein und am Dosenrand der jeweiligen Lackbehälter haften bleiben, um so eine Stippenbildung und dadurch bedingte Lackierfehler zu vermeiden. Desweiteren sollen die pastenförmigen Zubereitungen lagerstabil sein und auch nach längerer Lagerung kein Absetzen zeigen. Die Pasten enthaltende Lacke sollen ein einheitliches Spritzbild, insbesondere auf größeren Flächen ergeben.

Die Aufgabe wird gelöst durch Zubereitungen von Mattierungsmitteln und/oder strukturgebenden Zusätzen in Pastenform, im folgenden als Mattiererpasten bezeichnet, enthaltend
A) 5 bis 30 Gew.-%, bevorzugt 7 bis 25 Gew.-% eines oder mehrerer thixotropierter (Meth)acrylcopolymerer und/oder eines oder mehrerer thixotropierter Polyester
B) 15 bis 45 Gew.-%, bevorzugt 20 bis 35 Gew.-% eines oder mehrerer Mattierungs- und/oder Strukurmittel,
C) 30 bis 65 Gew.-%, bevorzugt 35 bis 55 Gew.-% eines oder mehrerer organischer Lösemittel
sowie gegebenenfalls Netz- und Dispergiermittel, Rheologiemittel, Katalysatoren und gegebenenfalls weitere Additive und Hilfsstoffe, wobei sich die Anteile der Komponenten A), B) und C) auf 100 Gew.-% addieren und das Gewichtsverhältnis thixotropiertes (Meth)acrylcopolymer und/oder thixotropierter Polyester : Mattierungs- und/oder Strukturmittel 1 : 6 bis 1 : 0,8 beträgt.

Überraschend wurde gefunden, daß die erfindungsgemäße Aufgabe durch Einsatz der thixotropierten (Meth)acrylcopolymere und/oder thixotropierten Polyester in der Mattiererpaste gelöst werden kann. Es war nicht zu erwarten, daß die eingesetzten thixotropierten Harze, die in ihrer Anwendungsform im allgemeinen als stichfeste Substanzen vorliegen, mit den erforderlichen Mengen an Mattierungs- und/oder Strukturmitteln gefüllt werden können und fließfähige Pasten ergeben.

In der erfindungsgemäßen Mattiererpaste sind als Bindemittel thixotropierte (Meth)acrylcopolymere und/oder thixotropierte Polyester (Komponente A) enthalten. Unter thixotropierten Harzen werden beispielsweise durch Zusatz von Thixotropierungsmitteln modifizierte Harze verstanden, die unter Scherbeanspruchung einen Viskositätsabbau zeigen und nach der Scherbeanspruchung im Ruhezustand ihre Ursprungsviskosität, allerdings zeitverzögert, wieder zurückgewinnen. Das thixotrope Verhalten der Harze kann mittels verschiedener Methoden erreicht werden, worauf im folgenden noch näher eingegangen wird.

Bei den erfindungsgemäß einzusetzenden thixotropierten Harzen handelt es sich um solche auf Basis von (Meth)acrylcopolymeren und/oder Polyestern, bevorzugt um solche auf Basis von hydroxyfunktionellen (Meth)acrylcopolymeren und/oder hydroxyfunktionellen Polyestern.

In Komponente A einsetzbare (Meth)acrylatcopolymere weisen bevorzugt eine Hydroxylzahl von 25 bis 200, besonders bevorzugt von 40 bis 150 und eine Säurezahl von 0 bis 50 auf. Die (Meth)acrylatcopolymere haben ein zahlenmittleres Molekulargewicht (Mn) von 1500 bis 30000 g/mol, bevorzugt von 2000 bis 15000 g/mol.

Die Herstellung der (Meth)acrylatharze kann durch Polymerisation nach üblichen Verfahren, z. B. der Substanz-, Lösungs-, oder Perlpolymerisation durchgeführt werden. Die verschiedenen Polymerisationsverfahren sind dem Fachmann bekannt. Das Lösungspolymerisationsverfahren wird für die Herstellung der (Meth)acrylatharze bevorzugt. Dabei wird im allgemeinen das Lösemittel im Reaktionsgefäß vorgelegt, auf Siedetemperatur geheizt und das Monomeren/Initiatorgemisch kontinuierlich in einer bestimmten Zeit zudosiert. Die Polymerisation kann bevorzugt bei Temperaturen zwischen 100°C und 160°C, durchgeführt werden.

Geeignete Initiatoren sind Per- und Azoverbindungen. Bevorzugt wird eine Menge von 0,2 bis 8 Gew.-% an Initiatoren, bezogen auf die Monomereneinwaage, eingesetzt.

Als organische Lösemittel, die zweckmäßigerweise bei der Lösungspolymerisation eingesetzt werden können, eignen sich beispielsweise: Alkohole, Glykolether, wie Ethylenglykoldimethylether; Propylenglykoldimethylether; Glykoletherester, wie Ethylglykolacetat, Butylglykolacetat, 3-Methoxy-n-butylacetat, Butyldiglykolacetat, Methoxypropylacetat, Ester wie Butylacetat, Isobutylacetat, Amylacetat; Ketone, wie Methylethylketon, Methylisobutylketon, Cyclohexanon, Isophoron, aromatische Kohlenwasserstoffe (z.B. mit einem Siedebereich von 136 bis 180°C) und aliphatische Kohlenwasserstoffe.

Zur Regelung des Molekulargewichtes können Kettenüberträger, wie z.B. Mercaptane, Thioglykolsäureester, Cumol, dimeres alpha-Methylstyrol eingesetzt werden.

Bei den einzusetzenden (Meth)acrylatcopolymeren handelt es sich bevorzugt um Copolymere mit vinylaromatischen Monomeren, wie z.B. Styrol oder Derivate davon, besonders bevorzugt mit Styrol. Die Copolymere haben vorzugsweise einen Styrolgehalt von mindestens 30 Gew.-%.

Bevorzugt vorhandene Hydroxylgruppen werden unter Verwendung hydroxylgruppenhaltiger Monomerer in das (Meth)acrylatharz eingeführt. Darüber hinaus kommen als radikalisch polymerisierbare Monomere weitere ethylenisch ungesättigte Monomere in Frage, wie sie für die radikalische Polymerisation dem Fachmann bekannt sind. Es kann sich um ungesättigte Monomere mit funktionellen Gruppen, z.B. Carboxylgruppen oder Glycidylgruppen, sowie übliche ungesättigte Monomere ohne weitere funktionelle Gruppen handeln.

Olefinisch ungesättigte Monomere mit Hydroxylgruppen sind beispielsweise Hydroxyalkylester oder Hydroxyarylester ungesättigter Carbonsäuren. Bevorzugt sind es Hydroxyalkylester der Acrylsäure oder Methacrylsäure mit aliphatischen Diolen mit 2 bis 20 C-Atomen. Beispiele für derartige Hydroxyalkylester mit einer primären Hydroxylgruppe sind Hydroxyethyl(meth)acrylat, Hydroxypropyl(meth)acrylat, Hydroxybutyl(meth)acrylat, Hydroxyamyl(meth)acrylat, Neopentylglykolmonoacrylat, Hydroxyhexyl(meth)acrylat, Hydroxyoctyl(meth)acrylat. Beispiele für Hydroxyalkylester mit einer sekundären Hydroxylgruppe sind 2-Hydroxypropyl(meth)acrylat, 2-Hydroxybutyl(meth)acrylat, 3-Hydroxybutyl(meth)acrylat. Es können jedoch auch die entsprechenden Ester anderer ungesättigter Carbonsäuren wie z.B. der Crotonsäure oder der Isocrotonsäure eingesetzt werden.

Eine weitere Gruppe OH-funktioneller Monomerer sind Hydroxyalkylamide ungesättigter Carbonsäuren wie z.B. der Acrylsäure, Methacrylsäure und Fumarsäure. Beispiele hierfür sind N-Hydroxyethyl-methacrylsäureamid, N-(2-Hydroxypropyl)-methacrylamid oder N-Hydroxyalkylfumarsäuremono- oder diamid. Gut geeignet sind auch Umsetzungsprodukte aus einem Mol Hydroxyalkyl(meth)acrylat und 2 Mol epsilon-Caprolacton und Addukte von (Meth)acrylsäure und Glycidylestern von gesättigten alpha,alpha-Dialkylalkanmonocarbonsäuren, beispielsweise Glycidylestern der Versaticsäure.

Andere hydroxylgruppenhaltige ungesättigte Verbindungen sind Allylalkohol, Monovinylether von Polyalkoholen, besonders von Diolen wie z.B. der Monovinylether des Ethylenglykols oder Butandiols, hydroxylgruppenhaltige Allylether oder -ester wie 2,3-Dihydroxypropylmonoallylether, Trimethylolpropranmonoallylether oder 2,3-Dihydoxypropansäureallylester sowie Glycerinmono(meth)acrylat.

Besonders geeignet sind Hydroxyalkyl(meth)acrylate, wie insbesondere Hydroxyethyl(meth)acrylat, Hydroxypropyl(meth)acrylat und Hydroxybutyl(meth)acrylat.

Geeignete ungesättigte Monomere ohne weitere funktionelle Gruppen sind beispielsweise Ester ungesättigter Monocarbonsäuren mit aliphatischen einwertigen verzweigten oder unverzweigten sowie cyclischen Alkoholen mit 1 bis 20 C-Atomen. Bevorzugt handelt es sich um Ester der Acrylsäure oder Methacrylsäure. Beispiele für Ester mit aliphatischen Alkoholen sind Methylacrylat, Ethylacrylat, Isopropylacrylat, tert.-Butylacrylat, n-Butylacrylat, Isobutylacrylat, 2-Ethylhexylacrylat, 2-Ethylhexylacrylat, Laurylacrylat, Stearylacrylat und die entsprechenden Methacrylate. Beispiele für Ester mit cyclischen Alkoholen sind Cyclohexyl(meth)acrylat, Trimethylcyclohexyl(meth)acrylat, 4-tert. Butylcyclohexyl(meth)acrylat und Isobornyl(meth)acrylat.

Weitere ungesättigte Monomere sind beispielsweise Vinylester, wie Vinylacetat. Es können jedoch auch ethylenisch polyungesättigte Monomere eingesetzt werden. Das sind Monomere mit mindestens zwei radikalisch polymerisierbaren Doppelbindungen. Beispiele hierfür sind Divinylbenzol, 1,4-Butandioldiacrylat, 1,6-Hexandioldiacrylat, Neopentylglykoldimethacrylat, Glycerindimethacrylat.

Bevorzugte Monomerkomponenten für die Herstellung der (Meth)acrylcopolymere sind Alkylester sowie Hydroxyalkylester der (Meth)acrylsäure und Styrol neben gegebenenfalls weiteren alpha-, beta-ungesättigten Monomeren und/oder gegebenenfalls (Meth)acrylsäure. Beispiele für Alkylester sind solche mit 1 bis 7 C-Atomen im Alkylrest, z.B. Methyl(meth)acrylat, Ethyl(meth)acrylat, Buryl(meth)acrylat, Pentyl(meth)acrylat und Cyclohexyl(meth)acrylat.
Beispiele für Hydroxyalkylester sind Hydroxyethyl(meth)acrylat, Hydroxypropyl(meth)acrylat, Butandiol-1,4-monoacrylat, Hexandiol-1,6-monomethacrylat und Umsetzungsprodukte von Hydroxyalkyl(meth)acrylaten mit epsilon-Caprolacton.

In Komponente A einsetzbare Polyester weisen bevorzugt eine Hydroxylzahl von 25 bis 200, besonders bevorzugt von 40 bis 150 und eine Säurezahl von 0 bis 50 auf. Die Polyester haben bevorzugt ein zahlenmittleres Molekulargewicht (Mn) von 1000 bis 6000, bevorzugt von 1000 bis 3000. Bei den Polyestern handelt es sich urn Polykondensationsprodukte aus mehrwertigen Polycarbonsäuren oder deren Anhydriden und mehrwertigen Polyolen, gegebenenfalls unter Mitverwendung von Monocarbonsäuren. Um entsprechende OH-Zahlen zu erhalten, werden die Polyester bevorzugt mit einem Alkoholüberschuß hergestellt. Sollen die Polyester Carboxylgruppen enthalten, können diese durch unvollständige Veresterung oder durch Verwendung carboxylgruppenhaltiger Monomere erhalten werden.

Beispiele für geeignete Polycarbonsäuren sind aromatische, cycloaliphatische und aliphatische, wie z.B. ortho-Phthalsäureanhydrid, Isophthalsäure, Tetrahexahydrophthalsäure, 1,4-Cyclohexandicarbonsäure, 4-Methylhexahydrophthalsäure, Bernsteinsäure(anhydrid), Adipinsäure, Sebazinsäure und Dimerfettsäure.

Geeignete Alkoholkomponenten sind beispielsweise Glykole, wie Ethylenglykol, Polyethylenglykole, Butandiole, Neopentylglykol, Cyclohexandimethanol, Trimethylpentandiol und höherwertige Alkohole, wie z.B. Trimethylolethan und Pentaerythrit.

Gegebenenfalls können auch zusätzlich natürliche und synthetische Monocarbonsäuren eingesetzt werden, z.B. Benzoesäure, Laurinsäure, Fettsäuren aus natürlich vorkommenden Ölen.

Die Thixotropierung der (Meth)acrylatharze und/oder Polyesterharze kann auf übliche Art und Weise erfolgen. Die verschiedenen Möglichkeiten sind Stand der Technik und dem Fachmann bekannt. Beispielsweise können übliche Thixotropierungsmittel eingesetzt werden. Es wird angenommen, daß die Thixotropie im Harz im wesentlichen über H-Brückenbildung ausgebildet wird.

Zur Thixotropierung können beispielsweise sogenannte SCA-Mittel (SCA= Sag Control Agent) eingesetzt werden. Bei diesen Substanzen handelt es sich um im allgemeinen niedermolekulare halbkristalline organische Verbindungen auf Harnstoffbasis. Diese Verbindungen werden im allgemeinen aus Monoaminen und/oder Polyaminen und/oder polymeren Stoffen mit mindestens einer Aminogruppe und aus Mono- und/oder Polyisocyanaten und/oder polymeren Stoffen mit mindestens einer Isocyanatgruppe hergestellt. In der Literatur sind eine Vielzahl dieser SCA-Mittel sowie die Verfahren zur ihrer Herstellung beschrieben.

Zur Thixotropierung können ebenso Polyurethane, Polyurethanharnstoffe und/oder Polyamide eingesetzt werden. Bevorzugt erfolgt die Thixotropierung mit Polyurethanen oder Polyurethanharnstoffen. Bei den Polyurethanen und Polyurethanharnstoffen handelt es sich beispielsweise um Umsetzungsprodukte aus Isocyanatverbindungen, z.B. Diisocyanate und/oder Polyisocyanate, und hydroxyfunktionellen Komponenten, z.B. hydroxyfunktionellen (Meth)acrylaten und/oder Polyestern und/oder niedermolekularen hydrbxyfunkuonellen Verbindungen und/oder Mono- und/oder Polyaminen. Die Umsetzungsprodukte können dabei gegebenenfalls auch Ethergruppen aufweisen. Bevorzugt werden als Ausgangsstoffe Verbindungen mit aromatischen Strukturen eingesetzt.

In den thixotropierten (Meth)acrylat- und/oder Polyesterharzen liegen (Meth)acrylatund/oder Polyesteranteile zu den Anteilen der Thixotropierungsmittel, z.B. der Polyurethananteilen, beispielsweise im Gewichtsverhältnis von 95 : 5 bis 50 : 50, bevorzugt 90 : 10 bis 55 : 45 vor. Die thixotropierten (Meth)acrylat- und/oder Polyesterharze weisen bevorzugt einen Stickstoff-Gehalt von beispielsweise 10 bis 150 mmol/100 g Festharz, bevorzugt von 20 bis 100 mmol/100 g Festharz auf. Die Herstellung der thixotropierten Harze kann beispielsweise erfolgen, indem die einzelnen Bestandteile separat hergestellt und anschließend in geeigneter Weise miteinander gemischt bzw. in Verbindung gebracht werden. Die Herstellung der thixotropierten Harze kann beispielsweise auch erfolgen in dem die Thixotropierungsmittel in Gegenwart der (Meth)acrylat- und/oder Polyesterharze hergestellt werden.

Die thixotropierten (Meth)acrylat- und/oder Polyesterharze liegen im allgemeinen in Lösemittelform mit verschiedenen Festkörperanteilen vor. Geeignete Lösemittel sind beispielsweise solche, wie sie zur Herstellung der (Meth)acrylcopolymere bereits genannt wurden. Beispiele für Lösemittel sind Alkohole, Ester wie Ethylacetat, Isopropylacetat, n-Propylacetat, Isobutylacetat und 2-Ethylhexylacetat, aromatische Kohlenwasserstoffe wie Toluol, o-, m-, p-Xylol, Ethylbenzol, Solvesso 100 (Gemisch aromatischer Kohlenwasserstoffe mit einem Siedebereich von 153 bis 180°C), aliphatische Kohlenwasserstoffe.

Die Harze können beispielsweise mit einem Festkörpergehalt von 40 bis 85 Gew.-% in Lösemittelform vorliegen.

Einsetzbare thixotropierte (Meth)acrylat- und/oder Polyesterharze sind dem Fachmann bekannt und auch als Handelsprodukte erhältlich. Thixotropierte (Meth)acrylatharze sind beispielsweise unter den Namen Jagotex® F216 THIX, Jagotex ® F219 THIX, Jagotex SCA-Y, Halwemer F 2200 oder Setalux C-91389 VX-45 erhältlich. Thixotropierte Polyesterharze sind beispielsweise unter dem Namen Jägapol PE 300 THIX erhältlich.

Besonders vorteilhaft können mit Polyurethanen und/oder Polyharnstoffen und/oder Polyurethanharnstoffen thixotropierte (Meth)acrylcopolymere eingesetzt werden.

Die erfindungsgemäße Mattiererpaste enthält neben den thixotropierten (Meth)acrylat- und/oder Polyesterharzen weiterhin ein oder mehrere Mattierungsund/oder Strukturmittel (Komponente B). Die Mattierungsmittel können anorganischer oder organischer Natur sein. Beispiele für anorganische. Mattierungsmittel sind amorphe oder pyrogene Kieselsäure, Kieselgele und Schichtsilikate, z.B. Magnesiumsilicathydrat (Talkum). Die anorganischen Mattierungsmittel können unbehandelt oder mit organischen Verbindungen, z.B. mit geeigneten Wachstypen, oder auch mit anorganischen Verbindungen oberflächenbehandelt vorliegen. Beispiele für organische Mattierungsmittel sind Al-, Zn-, Ca- oder Mg-Stearat, wachsartige Verbindungen, wie z.B. mikronisierte Polypropylenwachse, sowie Harnstoff-Formaldehyd-Kondensate. Mattierer sind als Handelsprodukte erhältlich (z.B. unter der Bezeichnung Syloid ®) und dem Fachmann bekannt. Sie werden in unterschiedlicher Partikelgröße angeboten. Die gewählte Partikelgröße der Mattierungsmittel kann in üblicher Weise auf die Trockenfilmdicke gut abgestimmt werden, um den gewünschten Kompromiss zwischer hoher Mattierwirkung und Oberflächenglätte zu gewährleisten. Grobe Mattierungsmittel zeigen bei gleichem Porenvolumen eine höhere Mattierwirkung, erzeugen jedoch auch eine rauhere Filmoberfläche. Die durchschnittliche Partikelgröße kann beispielsweise 2 bis 16 µm betragen.

Einsetzbare Strukturmittel sind z.B. vermahlene Kunststoffe, wie z.B. vermahlenes Polyamid oder vermahlenes Polypropylen. Entsprechende Produkte sind z.B. erhältlich unter den Handelsbezeichnungen Propyltex, Vestosint und Orgasol. Desweiteren können als Strukturmittel vermahlener Sand oder vermahlenes Glas eingesetzt werden. Die Teilchengröße der Strukturmittel liegt bevorzugt in Bereichen von 30 bis 200 µm.

Bei der Herstellung der Mattiererpasten hat es sich als vorteilhaft erwiesen, als Mattierungsmittel 65 bis 90 Gew.-%, bezogen auf die Gesamtmenge an Mattierungsund/oder Strukturmitteln, an blättchenförmigen mattierend wirkenden Füllstoffen einzusetzen. Beispiele für blättchenförmige mattierend wirkende Füllstoffe sind Magnesiumsilicathydrat (Talkum) und blättchenförmig verwachsene Mineralien, wie blättchenförmige Verwachsungen aus Glimmer, Chlorit und Quarz.

Die erfindungsgemäße Mattiererpaste enthält ein oder mehrere organische Lösemittel (Komponente C). Das können für eine Lackformulierung einsetzbare übliche Lösemittel sein.

Insbesondere kann es sich um Glykolether, wie Ethylenglykoldimethylether, Propylenglykoldimethylether, Glykoletherester, wie Ethylglykolacetat, Butylglykolacetat, 3-Methoxy-n-Butylacetat, Butyldiglykolacetat, Methoxypropylacetat; Ester, wie Butylacetat, Isoburylacetat, Amylacetat; Ketone, wie Methylethylketon, Methylisobutylketon, Cyclohexanon, Isophoron und aromatische oder aliphatische Kohlenwasserstoffe handeln.

Die erfindungsgemäße Mattiererpaste kann desweiteren Netz- und Dispergiermittel, Rheologiemittel, Katalysatoren und gegebenenfalls weitere Additive und Hilfsstoffe enthalten.

Geeignete Netz- und Dispergiermittel sind beispielsweise solche auf Polyester-Polyacrylsäure-und/oder Polyacrylatbasis. Geeignete Rheologiemittel sind beispielsweise solche auf Basis pyrogener Kieselsäure, auf Basis von Schichtsilikaten, hydrierten Rizinusölen und polymerer Harnstoff- bzw. Harnstoff-Urethanverbindungen. Auch diese Produkte sind dem Fachmann geläufig und im Handel erhältlich, beispielsweise die verschiedenen Disperbyk- bzw. Byk-Typen von Byk-Chemie oder die verschiedenen Efka-Typen von Efka. Die Netz- bzw. Dispergier- und Rheologiemittel werden bevorzugt in Mengen von 0,3 bis 8 Gew.-%, bezogen auf die Gesamtmenge an Mattiererpaste, eingesetzt.

In der Mattiererpaste gegebenenfalls vorhandene Katalysatoren können beispielsweise zur Katalysierung der im fertigen Beschichtungsmittel ablaufenden Vernetzungsreaktion dienen, sofern vernetzbare Bindemittel eingesetzt werden. So kommen im Falle von hydroxylgruppenhaltigen isocyanatvernetzenden Bindemittelsystemen als Katalysatoren beispielsweise organische Zinnverbindungen oder tertiäre Amine in Frage.

Bei den gegebenenfalls eingesetzten Additiven handelt es sich um lackübliche Additive, wie beispielsweise Antiabsetzmittel, Verlaufsmittel, Weichmacher und Lichtschutzmittel.

Die Herstellung der Mattiererpaste erfolgt in üblicher Weise durch Vermischen und Dispergieren der einzelnen Komponenten.

Die so erhaltenen erfindungsgemäßen Mattiererpasten sind gut fließ- und dosierfähig und können problemlos z.B. in High-solid-Beschichtungsmittel eingearbeitet werden. Angetrocknete Reste der Mattiererpasten bzw. der sie enthaltenden Lacke bleiben an den jeweiligen Lackbehältern haften (kein Krümeln). Insbesondere von Vorteil ist, daß die Mattiererpasten aufgrund der guten Fließ- und Verarbeitungseigenschaften als Zusatzmischlacke in einem High-solid-Mischlacksystem eingesetzt werden können.

Die Erfindung betrifft daher auch Beschichtungsmittel, welche die erfindungsgemäßen Mattiererpasten enthalten bzw. die Verwendung der Mattiererpasten in pigmentierten und nicht pigmentierten Beschichtungsmitteln, insbesondere die Verwendung in pigmentierten Decklacken. Bei den Beschichtungsmitteln handelt es sich dabei um die dem Fachmann bekannten Klarlacke oder pigmentierten Decklacke, die üblicherweise in der Fahrzeug- und Fahrzeugreparaturlackierung eingesetzt werden. Es kann sich dabei um ein-, zwei- oder mehrkomponentige Lacke handeln.

Die Beschichtungsmittel enthalten a) ein oder mehrere filmbildende Bindemittel, b) gegebenenfalls ein oder mehrere Vernetzer c) eine Mattiererpaste, wie vorstehend beschrieben, sowie gegebenenfalls ein oder mehrere organische Lösemittel, Pigmente, Füllstoffe, lackübliche Additive und Hilfsstoffe.

Als filmbildende Bindemittel können physikalisch trocknende oder chemisch vernetzende Bindemittel eingesetzt werden. Es handelt sich hierbei um alle dem Fachmann geläufigen Bindemitteltypen, wie sie üblicherweise in lösemittelbasierenden Klarlacken und pigmentierten Decklacken auf dem Gebiet der Fahrzeuglackierung, insbesondere der Fahrzeugreparaturlackierung, eingesetzt werden. Beispiele für physikalisch trocknende Bindemittel sind beispielsweise Polyacrylat-, Polyurethanund Polyesterharze, welche gegebenenfalls auch modifiziert sein können. Die Harze können einzeln oder in Kombination eingesetzt werden. Bei den chemisch vernetzenden Bindemitteln handelt es sich bevorzugt um Bindemittelsysteme auf der Basis von hydroxylgruppenhaltigen Bindemitteln und Polyisocyanatvernetzem.

Gegebenenfalls können in den Bindemitzelsystemen auch Reaktivverdünner enthalten sein.

Bevorzugte Beschichtungsmittel enthalten somit
a) ein oder mehrere hydroxylgruppenhaltige Polyadditions-, Polymerisationsund/oder Polykondensationsharze,
b) ein oder mehrere Polyisocyanate als Vernetzer,
c) eine Mattiererpaste, wie sie vorstehend beschrieben wurde
sowie gegebenenfalls ein oder mehrere organische Lösemittel, Pigmente, Füllstoffe, lackübliche Additive und Hilfsstoffe.

Die Komponenten a) und b) werden dabei vorzugsweise in einer solchen Menge eingesetzt, daß das Verhältnis der Hydroxylgruppen aus Komponente a) zu den Isocyanatgruppen aus Komponente b) 1: 3 bis 3 : 1 beträgt. Handelt es sich bei den eingesetzten thixotropierten Harzen um hydroxyfunktionelle Harze, so sind diese Harze bei der Berechnung des OH/NCO-Verhältnisse mit zu berücksichtigen.

Als hydroxylgruppenhaltige Bindemittelkomponente a) können beispielsweise Polyurethane, Polyester und Polyacrylate, einzeln oder in Kombination, eingesetzt werden. Die Harze weisen im allgemeinen eine Hydroxylzahl von 20 bis 250 mg KOH/g auf und können gegebenenfalls modifiziert sein. Besonders bevorzugt werden Polyacrylatharze mit Hydroxylzahlen von 80 bis 200 mg KOH/g und Säurezahlen von 0 bis 40 mg KOH/g als hydroxylgruppenhaltige Bindemittelkomponente a) eingesetzt. Die Polyacrylatharze haben ein bevorzugtes zahlenmittleres Molekulargewicht Mn von 1000 bis 20000, besonders bevorzugt von 1000 bis 10000.

Die bevorzugt einsetzbaren Polyacrylate werden durch radikalische Polymerisation olefinisch ungesättigter Monomere, bevorzugt mittels Lösungspolymerisation hergestellt.

Die Hydroxylgruppen werden unter Verwendung hydroxylgruppenhaltiger Monomere in das Polyacrylatharz eingeführt. Darüberhinaus kommen als radikalisch polymerisierbare Monomere praktisch alle olefinisch ungesättigten Monomere in Frage, wie sie für die radikalische Polymerisation geläufig sind. Es kann sich um ungesättigte Monomere mit funktionellen Gruppen, z.B. Carboxylgruppen oder Glycidylgruppen, sowie übliche ungesättigte Monomere ohne weitere funktionelle Gruppen handeln. Zur Beschreibung der einsetzbaren Monomerengruppen und zur Herstellung der Polyacrylate wird auf die vorstehende Beschreibung der in der Mattiererpaste vorliegenden (Meth)acrylatharze verwiesen.

Die einzelnen Monomeren werden dabei in solchen Mengen eingesetzt, daß gewünschte Hydroxyl- und Säurezahlen erhalten werden.

Die als Bindemittelkomponente a) bevorzugt einsetzbaren Poly(meth)acrylate können einzeln oder in Kombination eingesetzt werden. Sie können auch im Gemisch mit weiteren hydroxyfunktionellen Komponenten, z.B. hydroxyfunktionellen Polyestern und/oder Polyurethanen, sowie mit hydroxyl- und/oder aminogruppenhaltigen Reaktivverdünnern vorliegen.

Bei den als Vernetzer einsetzbaren Polyisocyanaten (Komponente b) handelt es sich beispielsweise um beliebige organische Polyisocyanate mit aliphatisch, cycloaliphatisch, araliphatisch und/oder aromatisch gebundenen freien Isocyanatgruppen. Die Polyisocyanate sind bei Raumtemperatur flüssig oder durch Zusatz organischer Lösemittel verflüssigt. Die Polyisocyanate weisen bei 23 °C im allgemeinen eine Viskosität von 1 bis 6000 mPas, vorzugsweise über 5 und unter 3000 mPas auf.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 4.

Besonders gut geeignet sind beispielsweise die sogenannten "Lackpolyisocyanate" auf Basis von Hexamethylendiisocyanat, 1-Isocyanato-3,3,5-trimethyl-5-isocyanatomethylcyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate.

Ebenfalls gut geeignet sind 1,1,6,6-Tetramethyl-hexamethylendiisocyanat, 1,5-Dibutyl-pentamethyldiisocyanat, p- oder m-Tetramethylxylylendiisocyanat.
Weitere Beispiele für einsetzbare Polyisocyanate sind 1,4-Cyclohexan-, 1,2-Cyclohexan-diisocyanat, Tetramethylen-, Pentamethylendiisocyanat.

Die Düsocyanate können auch in üblicher Weise zu höherfunktionellen Verbindungen umgesetzt werden, beispielsweise durch Trimerisierung oder durch Umsetzung mit Wasser oder Polyolen, wie z.B. Trimethylolpropan oder Glycerin.

In den Beschichtungsmitteln ist als Komponente c) die erfindungsgemäße Mattiererpaste enthalten. Der Anteil an Mattiererpaste im Beschichtungsmittel kann in relativ weiten Grenzen variieren. Beispielsweise können 5 bis 60 Gew.-% , bevorzugt 20 bis 55 Gew.-% Mattiererpaste im gesamten Beschichtungsmittel enthalten sein. Die einzusetzende Menge ist dabei beispielsweise abhängig vom jeweiligen Bindemittel- bzw. Lacksystem sowie vom einzustellenden Glanzgrad und/oder vom zu erzielenden Struktureffekt.

In den Beschichtungsmitteln können ein oder mehrere organische Lösemittel, Pigmente, Füllstoffe und/oder lackübliche Additive enthalten sein.

Die Lösemittel können aus der Herstellung der Bindemittel stammen oder separat zugegeben werden. Dabei handelt es sich um dem Fachmann bekannte lackübliche Lösemittel. Beispiele für einsetzbare Lösemittel sind Glykolether, wie Ethylenglykoldimethylether; Propylenglykoldimethylether; Glykoletherester, wie Ethylglykolacetat, Butylglykolacetat, 3-Methoxy-n- butylacetat, Butyldiglykolacetat, Methoxypropylacetat, Ester wie Butylacetat, Isobutylacetat, Amylacetat; Ketone , wie Methylethylketon, Methylisobutylketon, Cyclohexanon, Isophoron, aromatische Kohlenwasserstoffe (z.B. mit einem Siedebereich von 136-180 °C) und aliphatische Kohlenwasserstoffe.

In den Überzugsmitteln können übliche anorganische und/oder organische Farbpigmente und/oder Füllstoffe sowie transparente Pigmente enthalten sein. Beispiele für anorganische oder organische Farbpigmente oder Füllstoffe sind Titandioxid, mikronisiertes Titandioxid, Eisenoxidpigmente, Ruß, mikronisierter Glimmer, Azopigmente, Phthalocyaninpigmente, Chinacridon- oder Pyrrolopyrrolpigmente, Siliciumdioxid, Bariumsulfat, Aluminium- und Magnesiumsilikat.

Ebenso können in den Beschichtungsmitteln Effektpigmente enthalten sein. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente.

Weiterhin können die Beschichtungsmittel lacktechnische Additive enthalten, beispielsweise rheologiebeeinflussende Mittel, wie hochdisperse Kieselsäure, Schichtsilikate oder polymere Harnstoffverbindungen. Daneben können auch Antiabsetzmittel, Verlaufsmittel, Lichtschutzmittel, Antischaummittel, wie beispielsweise silikonhaltige Verbindungen, Netzmittel sowie haftvermittelnde Substanzen eingesetzt werden.

Die Additive und Hilfsstoffe werden in üblichen, dem Fachmann geläufigen Mengen eingesetzt.

Es handelt sich bei den bevorzugten Beschichtungsmitteln um zweikomponentige Systeme. Die miteinander reaktiven Komponenten a) und b) müssen daher getrennt gelagert werden. Sie werden erst kurz vor der Applikation, gegebenenfalls mit Pigmenten, Füllstoffen und Additiven, miteinander vermischt. Erforderlichenfalls kann noch mit Lösemitteln auf Spritzviskosität eingestellt werden.

Die erfindungsgemäßen Mattiererpasten können den Beschichtungsmitteln auf verschiedene Weise zugegeben werden. Handelt es sich um eine Grundauffertigung des zu erstellenden Lackes, dann kann die Mattiererpaste als eine Komponente bei der Herstellung der hydroxylfunkrtionellen Komponente, im allgemeinen als Stammkomponente bezeichnet, zugesetzt werden. Wird der zu erstellende Lack mittels eines Mischlack- oder Modulsystems hergestellt, dann können die Mattiererpasten als Zusatzmischlack Bestandteil des Mischlack- bzw. Modulsystems sein und werden entsprechend einer vorgegebenen Mischformel mit anderen farbund/oder effektgebenden Mischlacken bzw. Modulkomponenten zum fertigen Lack verarbeitet.

Aufgrund der guten Fließ- und Verarbeitungseigenschaften der Mattiererpasten, die auch bei hohen Anteilen an Mattierungs- und/oder Strukturmitteln gewährleistet bleiben, können die erfindungsgemäßen Mattiererpasten besonders vorteilhaft in einem High-solid-Mischlacksystem als Zusatzmischlack eingesetzt werden. Natürlich können die Mattiererpasten auch in Mischlacksystemen mit einem weniger hohen Festkörpergehalt bzw. generell zur Erstellung von Medium-solid- oder Low-solid-Lacken eingesetzt werden.

Dabei lassen sich die erfindungsgemäßen Mattiererpasten gut dosieren. Auch bei längerer Lagerung zeigt sich kein Absetzen der Struktur- und/oder Mattierungsmittel in den Pasten.

Die die Mattiererpasten enthaltenden Beschichtungsmittel sind besonders geeignet zur Herstellung von pigmentierten oder transparenten Deckschichten eines lufttrocknenden oder forciert- trocknenden Mehrschichtüberzuges. Sie können jedoch auch bei höheren Temperaturen von z.B. 80 bis 144°C gehärtet werden. Die die Mattiererpasten enthaltenden Beschichtungsmittel ergeben auch auf größeren Flächen ein einheitliches Spritzbild. Es kommt zu keiner Fleckenbildung.

Die Mattiererpasten bzw. die sie enthaltenden Beschichtungsmittel können eingesetzt werden in der Fahrzeug- und Industrielackierung, insbesondere der Fahrzeugreparaturlackierung. Sie sind anwendbar zur Beschichtung von Metalluntergründen, aber auch zur Beschichtung von Kunststoffsubstraten. Bei der Beschichtung von Kunststoffteilen, ist noch von Vorteil, daß im Kunststofflack keine zusätzlichen Elastifizierer erforderlich sind, da die Mattiererpasten gleichzeitig eine elastifizierende Wirkung ausüben.

Die die Mattiererpasten enthaltenden Beschichtungsmittel werden nach bekannten Verfahren, bevorzugt mittels Spritzauftrag, appliziert. Eine transparente Klarlackschicht kann beispielsweise auf konventionelle oder wäßrige Basislacke aufgetragen werden, worauf beide Schichten gemeinsam z.B. 15 bis 45 Minuten bei z.B. 40 bis 80°C gehärtet werden. Eine pigmentierte Decklackschicht kann auf übliche 1K- oder 2K-Füllerschichten aufgebracht und analog gehärtet werden

Mit den die erfindungsgemäßen Mattiererpasten enthaltenden Beschichtungsmitteln werden je nach gefordertem Glanzgrad Überzüge mit matten oder mattglänzenden Oberflächen erzielt. Bei Zusatz von Strukturgebern ist eine gute Ausbildung des gewünschten Struktureffektes zu verzeichnen.

Die Erfindung soll an den folgenden Beispielen naher erläutert werden.

### Beispiele

### 1a) Herstellung einer Mattiererpaste

Aus folgenden Bestandteilen wird durch Vermischen und Dispergieren eine Paste hergestellt:

| | |
|---|---|
| 30,0 | Gew.-Teile eines thixotropierten Acrylatharzes, 60 %ig in Xylol (Halwemer F2200) |
| 4,0 | Gew.-Teile eines handelsüblichen Netzadditivs |
| 25,0 | Gew.-Teile Talkum |
| 4,0 | Gew.-Teile eines handelsüblichen Mattierers auf Basis pyrogener Kieselsäure |
| 0,02 | Gew.-Teile Dibutylzinndilaurat |
| 35,3 | Gew.-Teile Butylacetat |

### 1b) Herstellung einer Strukturpaste

Aus folgenden Bestandteilen wird durch Vermischen und Dispergieren eine Paste hergestellt:

| | |
|---|---|
| 30,0 | Gew.-Teile eines thixotropierten Acrylatharzes, 60 %ig in Xylol (Halwemer F2200) |
| 10,0 | Gew.-Teile eines handelsüblichen Antiabsetzmittels |
| 8,0 | Gew.-Teile eines handelsüblichen Mattierers auf Basis pyrogener Kieselsäure |
| 13,0 | Gew.-Teile eines handelsüblichen Strukturmittels auf Basis Polyamidgranulat |
| 34,0 | Gew.-Teile Butylacetat |

Die so hergestellten Pasten sind fließfähig. Angetrocknete Reste der Pasten bzw. der sie enthaltenden Lacke sind im wesentlichen krümelfrei und bleiben z.B. am Dosenrand haften. Die Pasten zeigen auch nach längerer Lagerung kein Absetzen.

### 2) Herstellung eines Decklackes

### 2a) mit Mattiererpaste

Ein Volumen-Teil der gemäß 1a) hergestellten Mattiererpaste wird mit einem Volumen-Teil einer Stammlackkomponente (Standox Standocryl® 2K-HS-Decklack, blau) und einem Volumen-Teil eines Polyisocyanathärters (Standox® 2K-HS-Härter, kurz) gut vermischt.

### 2b) mit Strukturpaste

Ein Volumen-Teil der gemäß 1b) hergestellten Strukturpaste wird mit einem Volumen.-Teil einer Stammlackkomponente (Standocryl® 2K-HS-Decklack, blau) und einem Volumen-Teil eines Polyisocyanathärters (Standox® 2K-HS-Härter, kurz) gut vermischt.

Die so erhaltenen Decklacke werden jeweils auf mit üblichen Primern und Füllern beschichtete Kunststoffsubstrate appliziert. Nach einer Ablüftphase von 10 Minuten wird 30 Minuten bei 60°C gehärtet.

Es werden den üblichen Anforderungen an eine Kunststofflackierung genügende matte bzw. strukturierte Oberflächen erhalten. Die Decklacke ergeben ein einheitliches Spritzbild ohne Fleckenbildung.

## Patentansprüche

1. Mattierungsmittel und/oder strukturgebende Zusätze enthaltende Pasten, enthaltend
A) 5 bis 30 Gew.-% eines oder mehrerer thixotropierter (Meth)acrylcopolymerer und/oder eines oder mehrerer thixotropierter Polyester
B) 15 bis 45 Gew.-% eines oder mehrerer Mattierungs- und/oder Strukturmittel,
C) 30 bis 65 Gew.-% eines oder mehrerer organischer Lösemittel
sowie gegebenenfalls Netz- und Dispergiermittel, Rheologiemittel, Katalysatoren und gegebenenfalls weitere Additive und Hilfsstoffe, wobei sich die Anteile der Komponenten A), B) und C) auf 100 Gew.-% addieren und das Gewichtsverhältnis thixotropiertes (Meth)acrylcopolymer und/oder thixotropierter Polyester : Mattierungs- und/oder Strukturmittel 1 : 6 bis 1 : 0,8 beträgt.

2. Paste nach Anspruch 1, **dadurch gekennzeichnet, daß** die Thixotropierung der (Meth)acrylatharze und/oder Polyesterharze der Komponente A) durch Zusatz üblicher Thixotropierungsmittel erfolgt.

3. Paste nach Anspruch 2, **dadurch gekennzeichnet, daß** die Thixotropierungsmittel stickstoffhaltig sind.

4. Paste nach Anspruch 3, **dadurch gekennzeichnet, daß** die Thixotropierungsmittel SCA-Mittel (SCA = Sag Control Agent), Polyurethane, Polyurethanharnstoffe, Polyharnstoffe und/oder Polyamide sind.

5. Paste nach Anspruch 2, 3 oder 4, **dadurch gekennzeichnet, daß** in den thixotropierten (Meth)acrylat- und/oder Polyesterharzen die (Meth)acrylatund/oder Polyesteranteile zu den Thixotropierungsmittelanteilen im Gewichtsverhältnis von 95 : 5 bis 50 : 50 vorliegen.

6. Paste nach Anspruch 3, 4 oder 5, **dadurch gekennzeichnet, daß** die thixotropierten (Meth)acrylat- und/oder Polyesterharze einen Stickstoff-Gehalt von 10 bis 150 mmol/100 g Festharz aufweisen.

7. Paste nach einem der Ansprüche 1 bis 6, **dadurch gekennzeichnet, daß** als zusätzliche Mattierungsmittel 65 bis 90 Gew.-% bezogen auf die Gesamtmenge an Mattierungs- und/oder Strulcturmittel, an blättchenförmigen mattierend wirkenden Füllstoffen eingesetzt werden.

8. Beschichtungsmittel, enthaltend
a) ein oder mehrere filmbildende Bindemittel,
b) gegebenenfalls einen oder mehrere Vernetzer, sowie
gegebenenfalls ein oder mehrere organische Lösemittel, Pigmente, Füllstoffe, lackübliche Additive und/oder Hilfsstoffe, **dadurch gekennzeichnet, daß** es
c) eine Paste gemäß einem der Ansprüche 1 bis 6 enthält.

9. Verfahren zur Herstellung eines mattierten oder strukturgebenden Beschichtungsmittels, **dadurch gekennzeichnet, daß** man eine Paste gemäß einem der Ansprüche 1 bis 6 als Modul lagert und vor der Anwendung eines Beschichtungsmittels diesem die Paste zusetzt.

10. Verwendung der Pasten gemäß einem der Ansprüche 1 bis 6 zur Herstellung von mattierenden oder strukturgebenden Beschichtungsmitteln.

11. Verwendung der Pasten und Überzugsmittel gemäß einem der Ansprüche 1 bis 6 zur Herstellung von matten, mattglänzenden und/oder strukturierten Oberflächen.

12. Verwendung der Pasten und Überzugsmittel nach einem der Ansprüche 1 bis 6 zur Herstellung von pigmentierten oder nicht-pigmentierten Decklackschichten bei der Mehrschichtlackierung, insbesondere auf dem Kraftfahrzeugsektor.

## Claims

1. Pastes containing matting agents and/or texture-imparting additives, said pastes containing
A) 5 to 30 wt.% of one or more thixotroped (meth)acrylic copolymers and/or one or more thixotroped polyesters
B) 15 to 45 wt.% of one or more matting and/or texture-imparting agents,
C) 30 to 65 wt.% of one or more organic solvents
and optionally wetting agents and dispersants, rheological agents, catalysts and optionally further additives and auxiliary substances, wherein the proportions of components A), B) and C) add up to 100 wt.% and the ratio by weight of thixotroped (meth)acrylic copolymer and/or thixotroped polyester:matting and/or texture-imparting agents is 1:6 to 1:0.8.

2. A paste according to claim 1, **characterised in that** the (meth)acrylate resins and/or polyester resins of component A) are thixotroped by the addition of conventional thixotroping agents.

3. A paste according to claim 2, **characterised in that** the thixotroping agents contain nitrogen.

4. A paste according to claim 3, **characterised in that** the thixotroping agents are SCA agents (SCA = Sag Control Agent), polyurethanes, polyurethaneureas, polyureas and/or polyamides.

5. A paste according to claim 2, 3 or 4, **characterised in that** the (meth)acrylate and/or polyester fractions are present in the thixotroped (meth)acrylate and/or polyester resins in a ratio by weight of 95:5 to 50:50 relative to the thixotroping agent fractions.

6. A paste according to claim 3, 4 or 5, **characterised in that** the thixotroped (meth)acrylate and/or polyester resins have a nitrogen content of 10 to 150 mmol/100 g of solid resin.

7. A paste according to any one of claims 1 to 6, **characterised in that** lamellar extenders with a matting action are used as an additional matting agent in an amount of 65 to 90 wt.%, relative to the total quantity of matting and/or texture-imparting agents.

8. A coating composition, containing
a) one or more film-forming binders,
b) optionally one or more crosslinking agents, and
optionally one or more organic solvents, pigments, extenders, conventional coating additives and/or auxiliary substances, **characterised in that** it contains
c) a paste according to any one of claims 1 to 6.

9. A process for the production of a matted or texture-imparting coating composition, **characterised in that** a paste according to any one of claims 1 to 6 is stored as one component and, prior to use of a coating composition, the paste is added thereto.

10. Use of the pastes according to any one of claims 1 to 6 for the production of matting or texture-imparting coating compositions.

11. Use of the pastes and coating compositions according to any one of claims 1 to 6 for the production of matt, satin sheen and/or textured surfaces.

12. Use of the pastes and coating compositions according to any one of claims 1 to 6 for the production of pigmented or non-pigmented top coat layers in multilayer coating, in particular in the automotive sector.

## Revendications

1. Pâtes contenant des agents de matage et/ou des additifs de structuration, comprenant
A) 5 à 30 % en poids d'un ou de plusieurs copolymères (méth)acryliques thixotropes et/ou d'un ou de plusieurs polyesters thixotropes,
B) 15 à 45 % en poids d'un ou de plusieurs agents de matage et/ou de structuration,
C) 30 à 65 % en poids d'un ou de plusieurs solvants organiques,
ainsi que, le cas échéant, d'agents mouillants et dispersants, de régulateurs de rhéologie, de catalyseurs et, le cas échéant, d'autres additifs et auxiliaires, les pourcentages des composants A), B) et C) s'additionnant pour donner 100 % en poids et le rapport massique copolymère (méth)acrylique thixotrope et/ou polyesters thixotropes sur agents de matage et/ou de structuration allant de 1/6 à 1/0,8.

2. Pâte selon la revendication 1, **caractérisée en ce que** le thixotropage des résines de (méth)acrylate et/ou des résines de polyester des composants A) s'effectue par addition d'agents thixotropes usuels.

3. Pâte selon la revendication 2, **caractérisée en ce que** les agents thixotropes sont azotés.

4. Pâte selon la revendication 3, **caractérisée en ce que** les agents thixotropes sont des agents SCA (SCA = agent de contrôle de coulures), des polyuréthanes, des polyuréthane-urées, des polyurées et/ou des polyamides.

5. Pâte selon la revendication 2, 3 ou 4, **caractérisée en ce que**, dans les résines de (méth)acrylate et/ou de polyesters thixotropées, les pourcentages de (méth)acrylate et/ou de polyester par rapport aux pourcentages d'agents thixotropes se situent dans un rapport massique de 95/5 à 50/50.

6. Pâte selon la revendication 3, 4 ou 5, **caractérisée en ce que** les résines de (méth)acrylate et/ou de polyesters thixotropées présentent une teneur en azote de 10 à 150 mmol/100 g de résine solide.

7. Pâte selon l'une des revendications 1 à 6, **caractérisée en ce que** l'on utilise comme agent de matage supplémentaire 65 à 90 % en poids, par rapport à la quantité totale d'agents de matage et/ou de structuration, de charges lamellaires à action matifiante.

8. Agents de revêtement, contenant
a) un ou plusieurs liants filmogènes,
b) le cas échéant, un ou plusieurs réticulants, et
le cas échéant, un ou plusieurs solvants organiques, pigments, charges, additifs et/ou auxiliaires usuels dans les laques, **caractérisé en ce qu'**il
c) contient une pâte selon l'une des revendications 1 à 6.

9. Procédé de préparation d'un agent de revêtement matifiant ou structurant, **caractérisé en ce que** l'on stocke une pâte selon l'une des revendications 1 à 6 sous forme de module et que l'on ajoute l'agent de revêtement à la pâte avant l'application de celui-ci.

10. Utilisation de pâtes, selon l'une des revendications 1 à 6, pour la préparation de produits de revêtement matifiants ou structurants.

11. Utilisation de pâtes et de produits de revêtement, selon l'une des revendications 1 à 6, pour la préparation de surfaces mates, satinées et/ou structurées.

12. Utilisation de pâtes et de produits de revêtements, selon l'une des revendications 1 à 6, pour la préparation de couches de vernis pigmentées et non pigmentées pour un laquage multicouches, en particulier dans le secteur automobile.
